# EUROPÄISCHE PATENTANMELDUNG

(11) **EP 4 836 076 A1**
(43) Veröffentlichungstag der Anmeldung: **04.11.2026**
(21) Anmeldenummer: 26170328.4
(22) Anmeldetag: 01.04.2026
(51) Int. Cl.: H01M 10/48, B60L 3/00, B60L 58/24, H02J 7/61, H02J 7/62, H02J 7/63, H02J 7/64, H02J 7/65, H01M 10/42

(54) **VERFAHREN UND VORRICHTUNG ZUR FUNKTIONSÜBERWACHUNG VON BATTERIE-ZELLEN**

(30) Priorität: 29.04.2025 DE 102025116490
(71) Anmelder: MAN Truck & Bus SE, 80995 München (DE)
(72) Erfinder: Pravin, Rohit, 80995 München (DE); Scheibenbogen, Paul, 80995 München (DE); Tamas, George Mircea, 80995 München (DE)

(57) **Zusammenfassung**

Die Erfindung betrifft u. a. ein Verfahren zur Funktionsüberwachung von Batteriezellen (22). Das Verfahren weist ein Überwachen eines Zellspannungssignals, das eine Zellspannung einer Batteriezelle (22) angibt, auf. Weiterhin weist das Verfahren ein Unterbinden eines Betriebs der Batteriezelle (22), wenn eine vorbestimmte Abschaltbedingung (A1) erfüllt ist, wobei die vorbestimmte Abschaltbedingung (A1) erfüllt ist, wenn das überwachte Zellspannungssignal für eine vorbestimmte Zeitspanne (T) außerhalb eines vorbestimmten zulässigen Spannungsbereichs (Bₛₒₗₗ) liegt.

## Beschreibung

Die Erfindung betrifft ein Verfahren und eine Vorrichtung zur Funktionsüberwachung von Batteriezellen. Ferner betrifft die Erfindung einen elektrischen Energiespeicher und ein Kraftfahrzeug.

Im Stand der Technik sind Fahrzeuge, die mittels eines Elektromotors zumindest teilweise elektrisch angetrieben werden, grundsätzlich bekannt. Die hierfür notwendige elektrische Energie wird in der Regel von einer Traktionsbatterie des Fahrzeugs bereitgestellt, welche üblicherweise eine Vielzahl elektrisch miteinander verschalteter Batteriezellen aufweist.

Die vom Ladezustand abhängige Zellspannung der jeweiligen Batteriezellen sollte dabei in einem vom Zelltyp abhängigen Normbereich liegen. Insbesondere sollten Tiefenentladungen oder Überladungen vermieden werden, da diese die Batteriezellen irreversibel schädigen können. Bislang bekannte Ansätze zur Überwachung der Batteriezellen berücksichtigen dabei meist nur fixe Spannungslimits bzw. nur die Klemmenspannung der Batteriezellen, d. h. die Spannung der Batteriezellen unter Last bzw. bei angeschlossenen Verbrauchern. Dies stellt allerdings nicht in allen Betriebssituationen einen ausreichenden Zellschutz sicher.

Die Aufgabe der Erfindung besteht darin, eine Lösung zur Verbesserung der Betriebssicherheit eines elektrischen Energiespeichers bereitzustellen, mit der die Nachteile der bisherigen Lösungen vermieden werden können. Bevorzugt ist es eine Aufgabe der Erfindung, eine Lösung bereitzustellen, mit der zuverlässig gravierende Schäden am Energiespeicher, insbesondere ein thermisches Durchgehen des Energiespeichers, vermieden werden können.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Ein erster Aspekt der vorliegenden Offenbarung betrifft ein (z. B. computerimplementiertes) Verfahren. Bevorzugt dient das Verfahren zur Funktionsüberwachung von Batteriezellen (z. B. Lithium-Ionen-Batteriezellen) für einen elektrischen Energiespeicher (z. B. für eine Traktionsbatterie) für ein Kraftfahrzeug (z. B. ein Elektrofahrzeug). Das Verfahren weist ein Überwachen eines (z. B. dynamischen) Zellspannungssignals (z. B. mittels einer Überwachungsvorrichtung) auf, wobei das Zellspannungssignal eine Zellspannung einer Batteriezelle (z. B. des elektrischen Energiespeichers) angibt. Das Zellspannungssignal kann bspw. von einer Messeinrichtung, die für ein Erfassen der Zellspannung der Batteriezelle eingerichtet ist, bereitgestellt werden. Entsprechend kann das Verfahren optional auch ein Bereitstellen des (bzw. eines) Zellspannungssignals, das eine Zellspannung der (bzw. einer) Batteriezelle angibt, aufweisen. Das Zellspannungssignal kann z. B. ein analoges oder digitales Signal sein und/oder eine zwischen Anschlüssen bzw. Polen der Batteriezelle abfallende Spannung angeben. Weiterhin weist das Verfahren ein Unterbinden eines Betriebs (z. B. ein Abschalten und/oder Abtrennen) der Batteriezelle (z. B. mittels der Überwachungsvorrichtung) auf, wenn eine vorbestimmte (z. B. zuvor festgelegte) Abschaltbedingung erfüllt ist. Die vorbestimmte Abschaltbedingung ist bevorzugt (dann) erfüllt, wenn das überwachte Zellspannungssignal für eine vorbestimmte Zeitspanne (z. B. 60 Minuten) außerhalb eines vorbestimmten zulässigen Spannungsbereichs (z. B. innerhalb eines vorbestimmten zulässigen Zellspannungssignalbereichs) liegt. Vorzugsweise erfolgt das Unterbinden des Betriebs der Batteriezelle somit nicht sofort, wenn das überwachte Zellspannungssignal, z. B. einmalig oder nur kurzzeitig, (leicht) außerhalb des vorbestimmten zulässigen Spannungsbereichs liegt.

Auf vorteilhafte Weise kann dadurch die Betriebssicherheit der Batteriezelle erhöht werden, indem kritische bzw. die Batteriezelle womöglich schädigende Betriebssituationen vermieden werden können, zugleich jedoch kein vorschnelles Abschalten der Batteriezelle erfolgt. Beispielsweise können durch das Verfahren sowohl Überspannungssituationen, die zur Gaserzeugung und Zellalterung führen, als auch Unterspannungssituationen, bei denen sich Kupfer aus der Anode zersetzen kann, vermieden werden. Letzteres könnte bei einem späteren Ladevorgang zur Bildung von unerwünschten Kupferdendriten und somit zu einem Thermal Runaway führen, was durch das vorliegende Verfahren jedoch zuverlässig verhindert werden kann. Wie im Folgenden detaillierter beschrieben, eignet sich das Verfahren weiterhin besonders vorteilhaft, um Zellschäden vor dem aktiven Betrieb der Batteriezelle zu vermeiden.

In einem Ausführungsbeispiel kann, wenn das überwachte Klemmspannungssignal (z. B. erstmalig) außerhalb des vorbestimmten zulässigen Spannungsbereichs (der vorbestimmten Abschaltbedingung) liegt, ein (z. B. Auf- oder Abwärts-)Zähler zum Messen der vorbestimmten Zeitspanne gestartet werden. Beispielsweise kann der Zähler die vorbestimmte Zeitspanne (z. B. mit einer festen Schrittweite) hoch- oder herunterzählen. Weiterhin kann die vorbestimmte Abschaltbedingung (z. B. nur) dann erfüllt sein, wenn innerhalb der vom Zähler gemessenen vorbestimmten Zeitspanne das überwachte Zellspannungssignal ausschließlich außerhalb des zulässigen Spannungsbereichs liegt (bzw. niemals innerhalb des zulässigen Spannungsbereichs liegt). Zudem oder alternativ kann, wenn innerhalb der vom Zähler gemessenen vorbestimmten Zeitspanne das überwachte Zellspannungssignal (z. B. wieder) innerhalb des zulässigen Spannungsbereichs liegt, der Zähler zurückgesetzt werden. Vorteilhaft kann dadurch eine besonders einfache Möglichkeit zur Umsetzung der vorbestimmten Abschaltbedingung bereitgestellt werden.

In einem weiteren Ausführungsbeispiel kann das Zellspannungssignal zumindest zeitweise, vorzugsweise ausschließlich, mindestens 30 Minuten, vorzugsweise mindestens 60 Minuten, besonders bevorzugt mindestens 90 Minuten, nach einer letzten (z. B. elektrischen) Belastung (z. B. einem Anliegen einer Last an der Batteriezelle) und/oder einer letzten Ladung der Batteriezelle überwacht werden.

Zudem oder alternativ kann das Zellspannungssignal das Zellspannungssignal zumindest zeitweise, vorzugsweise ausschließlich, in einem (z. B. Gleichgewichts-)Zustand der Batteriezelle überwacht werden, nachdem (oder in dem) eine Zellspannungsänderung der Batteriezelle für eine Dauer von 10 Minuten weniger als 5 mV betrug (oder beträgt).

Zudem oder alternativ kann das Zellspannungssignal zumindest zeitweise, vorzugsweise ausschließlich, in einem im Wesentlichen unbelasteten Zustand der Batteriezelle (z. B. in einem Zustand, in dem kein Verbraucher an die Batteriezelle angeschlossen ist oder nur eine geringe Ladungsentnahme, z. B. durch einen Nebenverbraucher, erfolgt, wobei die Zellspannungsänderung der Batteriezelle aufgrund der Ladungsentnahme vorzugsweise weniger als 5 mV pro 10 Minuten beträgt) und/oder während die Batteriezelle nicht geladen wird, überwacht werden. Vorteilhaft kann dadurch eine kritische Ruhespannung der Batteriezelle möglichst vermieden und die Sicherheit weiter erhöht werden.

In einer Ausführungsform kann die vorbestimmte Zeitspanne (der vorbestimmten Abschaltbedingung) mindestens 60 Minuten, vorzugsweise mindestens 90 Minuten, besonders bevorzugt mindestens 120 Minuten, betragen. Erfinderseitig wurde festgestellt, dass sich diese Zeitspannen als besonders vorteilhaft erweisen.

In einer weiteren Ausführungsform kann das Verfahren (z. B. das Überwachen) während das Kraftfahrzeug abgestellt ist und/oder bei einem Start (z. B. bei einer Inbetriebnahme, nachdem das Kraftfahrzeug abgestellt war) des Kraftfahrzeugs durchgeführt werden. Da in diesen Betriebszuständen des Kraftfahrzeugs die Batteriezelle in der Regel noch nicht in Betrieb genommen wurde bzw. mit einem Verbraucher verbunden wurde, können hier möglichst frühzeitig Defekte erkannt und Schäden vermieden werden.

In einer Ausführungsvariante kann das Verfahren ferner ein Bereitstellen (z. B. ein Erfassen und/oder Empfangen) eines (z. B. von einer Temperaturerfassungseinrichtung erfassten) Temperatursignals, das eine Temperatur der Batteriezelle angibt, aufweisen. Weiterhin kann das Verfahren ein Anpassen des zulässigen Spannungsbereichs und/oder der vorbestimmten Zeitspanne in Abhängigkeit des bereitgestellten Temperatursignals aufweisen. Beispielsweise kann das Anpassen ein Auswählen des zulässigen Spannungsbereichs aus einer Mehrzahl von, z. B. für verschiedene Batteriezellentemperaturen vorgegebenen, Spannungsbereichen in Abhängigkeit von der bereitgestellten Temperatur aufweisen. Vorteilhaft kann dadurch eine Temperaturabhängigkeit der Zelleigenschaften berücksichtigt werden.

In einer weiteren Ausführungsvariante kann der zulässige Spannungsbereich (der vorbestimmten Abschaltbedingung) durch einen oberen Spannungsgrenzwert und/oder einen (z. B. unterhalb des oberen Spannungsgrenzwerts liegenden) unteren Spannungsgrenzwert begrenzt werden. Beispielsweise kann der zulässige Spannungsbereich ein zulässiges Spannungsband sein. Entsprechend kann die vorbestimmte Abschaltbedingung erfüllt sein, wenn das überwachte Zellspannungssignal für die vorbestimmte Zeitspanne oberhalb des oberen Spannungsgrenzwerts oder unterhalb des unteren Spannungsgrenzwerts liegt. Bevorzugt entspricht der obere Spannungsgrenzwert dabei einer (z. B. von einem Hersteller der Batteriezelle vorgegebenen) Ladeschlussspannung der Batteriezelle. Zudem oder alternativ kann der untere Spannungsgrenzwert einer (z. B. von dem bzw. einem Hersteller der Batteriezelle vorgegebenen) Entladeschlussspannung der Batteriezelle entsprechen. Vorteilhaft können dadurch die Batteriezelle schädigende Betriebszustände besonders zuverlässig vermieden werden.

In einem Ausführungsbeispiel kann die vorbestimmte Abschaltbedingung erfüllt sein, wenn das überwachte Zellspannungssignal für die vorbestimmte Zeitspanne oberhalb des oberen Spannungsgrenzwerts und unterhalb eines (z. B. vorbestimmten) oberen Notabschaltungsspannungswerts liegt. Beispielsweise kann die vorbestimmte Abschaltbedingung erfüllt sein, wenn das überwachte Zellspannungssignal für die vorbestimmte Zeitspanne in einem durch den oberen Spannungsgrenzwert und den oberen Notabschaltungsspannungswert definierten und/oder (z. B. oberhalb) an den zulässigen Spannungsbereich (z. B. unmittelbar) angrenzenden Spannungsband liegt. Der obere Notabschaltungsspannungswert kann bspw. größer als der obere Spannungsgrenzwert sein und/oder ein in keinem Fall tolerierbarer Zellhöchstspannungswert sein. Beispielsweise kann ein sofortiges Unterbinden eines Betriebs der Batteriezelle erfolgen, wenn das überwachte Zellspannungssignal größer als der obere Notabschaltungsspannungswert oder gleich dem oberen Notabschaltungsspannungswert ist (bspw. ohne dass hier eine zeitliche Dauer des Auftretens dieser Spannungswerte berücksichtigt wird).

Zudem oder alternativ kann die vorbestimmte Abschaltbedingung erfüllt sein, wenn das überwachte Zellspannungssignal für die vorbestimmte Zeitspanne unterhalb des unteren Spannungsgrenzwerts und oberhalb eines (z. B. vorbestimmten) unteren Notabschaltungsspannungswerts liegt. Beispielsweise kann die vorbestimmte Abschaltbedingung erfüllt sein, wenn das überwachte Zellspannungssignal für die vorbestimmte Zeitspanne in einem durch den unteren Spannungsgrenzwert und den unteren Notabschaltungsspannungswert definierten und/oder (z. B. unterhalb) an den zulässigen Spannungsbereich (z. B. unmittelbar) angrenzenden Spannungsband liegt. Der untere Notabschaltungsspannungswert kann bspw. kleiner als der untere Spannungsgrenzwert sein und/oder ein in keinem Fall tolerierbarer Zellniedrigspannungswert sein. Beispielsweise kann ein sofortiges Unterbinden eines Betriebs der Batteriezelle erfolgen, wenn das überwachte Zellspannungssignal kleiner als der untere Notabschaltungsspannungswert oder gleich dem unteren Notabschaltungsspannungswert ist (bspw. ohne dass hier eine zeitliche Dauer des Auftretens dieser Spannungswerte berücksichtigt wird). Vorteilhaft kann dadurch ein besonders sicherer Betrieb der Batteriezelle sichergestellt werden.

In einem weiteren Ausführungsbeispiel kann das Verfahren ferner ein Unterbinden des Betriebs der Batteriezelle aufweisen, wenn (z. B. unabhängig von der vorbestimmten Abschaltbedingung) eine andere vorbestimmte Abschaltbedingung erfüllt ist. Die andere vorbestimmte Abschaltbedingung ist dabei bevorzugt dann erfüllt, wenn das überwachte Zellspannungssignal entweder:
- für eine vorbestimmte kumulierte Zeitspanne innerhalb eines von dem zulässigen Spannungsbereich beabstandeten und zu höheren Spannungen versetzten oberen Spannungsbands liegt. Bevorzugt ist das obere Spannungsband zwischen dem oberen Spannungsgrenzwert und dem oberen Notabschaltungsspannungswert angeordnet. Weiterhin bevorzugt werden für die kumulierte Zeitspanne alle Zeiten, in denen das Zellspannungssignal Werte in dem oberen Spannungsband aufweist, aufsummiert, unabhängig davon, ob das Zellspannungssignal zwischenzeitlich auch (wieder) Werte außerhalb des oberen Spannungsbands annimmt; oder
- für eine vorbestimmte kumulierte Zeitspanne innerhalb eines von dem zulässigen Spannungsbereich beabstandeten und zu niedrigeren Spannungen versetzten unteren Spannungsbands liegt. Bevorzugt ist das untere Spannungsband zwischen dem unteren Spannungsgrenzwert und dem unteren Notabschaltungsspannungswert angeordnet. Weiterhin bevorzugt werden für die kumulierte Zeitspanne alle Zeiten, in denen das Zellspannungssignal Werte in dem unteren Spannungsband aufweist, aufsummiert, unabhängig davon, ob das Zellspannungssignal zwischenzeitlich auch (wieder) Werte außerhalb des unteren Spannungsbands annimmt.

In einer Ausführungsform kann das Verfahren ein Senden eines Befehls zur Ausgabe eines (z. B. optischen) Warnhinweises an eine Ausgabeeinheit (z. B. an ein Display) des Kraftfahrzeugs aufweisen, wenn die vorbestimmte Abschaltbedingung erfüllt ist. Zudem oder alternativ kann das Verfahren ein Senden einer Fehlermeldung an einen Fehlerspeicher des Kraftfahrzeugs aufweisen, wenn die vorbestimmte Abschaltbedingung erfüllt ist. Vorteilhaft kann dadurch ein zuverlässiges Informieren des Nutzers des Kraftfahrzeugs über einen Zelldefekt erreicht werden.

In einer weiteren Ausführungsform kann das Unterbinden des Betriebs der Batteriezelle ein elektrisches Abtrennen (z. B. ausschließlich) der Batteriezelle von weiteren Batteriezellen des elektrischen Energiespeichers (z. B. mittels einer Schalteinrichtung, insbesondere eines Zellkontaktiersystems) aufweisen, vorzugsweise derart, dass die weiteren Batteriezellen weiterhin betreibbar sind und/oder weiterhin elektrische Energie aus den weiteren Batteriezellen entnehmbar ist. Vorteilhaft kann dadurch ein möglichst zielgerichtetes Eingreifen in den Betrieb des elektrischen Energiespeichers erzielt werden.

Zudem oder alternativ kann das Unterbinden des Betriebs der Batteriezelle ein Deaktivieren eines gesamten, die Batteriezelle aufweisenden Moduls oder Batteriepacks des elektrischen Energiespeichers (z. B. mittels eines Batteriemanagementsystems) aufweisen, vorzugsweise derart, dass weitere Module oder Batteriepacks des elektrischen Energiespeichers weiterhin betreibbar sind und/oder weiterhin elektrische Energie aus den weiteren Modulen oder Batteriepacks entnehmbar ist.

Ein weiterer Aspekt der vorliegenden Offenbarung betrifft eine Vorrichtung zur Funktionsüberwachung von Batteriezellen (z. B. Lithium-Ionen-Batteriezellen) für einen elektrischen Energiespeicher (z. B. für eine Traktionsbatterie) für ein Kraftfahrzeug (z. B. Elektrofahrzeug). Entsprechend kann die Vorrichtung auch als Überwachungsvorrichtung bezeichnet werden. Die Vorrichtung bzw. Überwachungsvorrichtung kann z. B. Teil eines Batterie-Management-Systems sein. Die Vorrichtung bzw. Überwachungsvorrichtung ist für ein Durchführen eines Verfahrens, wie hierin beschrieben, eingerichtet. Folglich sollen die vorstehend im Zusammenhang mit dem Verfahren offenbarten Merkmale auch im Zusammenhang mit der Vorrichtung offenbart und beanspruchbar sein. Entsprechendes soll auch umgekehrt gelten. Vorteilhaft können mittels der Vorrichtung die gleichen Vorteile erzielt werden, die bereits unter Bezugnahme auf das Verfahren erläutert wurden.

In einer Ausführungsform kann die Vorrichtung eine Messeinrichtung aufweisen, die für ein Erfassen eines Zellspannungssignals mindestens einer Batteriezelle eingerichtet sein kann. Das Zellspannungssignal kann dabei vorzugsweise eine Zellspannung der mindestens einen Batteriezelle angeben. Beispielsweise kann die Messeinrichtung dazu mit der mindestens einen Batteriezelle (z. B. elektrisch) koppelbar und/oder verbindbar sein. Zum Erfassen der Zellspannung sind im Stand der Technik grundsätzlich verschiedene Methoden, die in der Regel hochohmige Spannungssensoren bzw. Komparatorschaltungen verwenden, bekannt, sodass an dieser Stelle auf eine detaillierte Beschreibung der Spannungsmessung verzichtet werden kann.

Zudem oder alternativ kann die Vorrichtung eine Temperaturerfassungseinrichtung aufweisen, die für ein Erfassen eines Temperatursignals mindestens einer Batteriezelle (bzw. der mindestens einen Batteriezelle) eingerichtet sein kann. Das Temperatursignal kann dabei vorzugsweise eine Temperatur der mindestens einen Batteriezelle angeben. Beispielsweise kann die Temperaturerfassungseinrichtung dabei mindestens einen Temperatursensor, bspw. in Form eines Heiß- oder Kaltleiters, eines Thermoelements und/oder eines Halbleiter-Temperatursensors, aufweisen.

Zudem oder alternativ kann die Vorrichtung eine Kommunikationseinrichtung aufweisen, die für ein (z. B. drahtloses oder kabelgebundenes) Empfangen von Signalen, vorzugsweise zum Empfangen des Zellspannungssignals und/oder des Temperatursignals, eingerichtet ist. Über die Kommunikationseinrichtung können auch Signale (z. B. Steuerbefehle) an andere Komponenten (z. B. die Schalteinrichtung) ausgegeben werden. Beispielsweise können die ausgegebenen Signale die Schalteinrichtung dazu veranlassen, mindestens eine Batteriezelle aus einem Bordnetz des Kraftfahrzeugs und/oder von weiteren Batteriezellen des elektrischen Energiespeichers abzutrennen.

Zudem oder alternativ kann die Vorrichtung einen (z. B. Daten-)Speicher und einen (z. B. Mikro-)Prozessor aufweisen. Auf dem Speicher können Steuerbefehle zur Durchführung des Verfahrens hinterlegt sein, welche von dem Prozessor abgearbeitet werden können, was die Vorrichtung dazu veranlasst, das Verfahren durchzuführen. Die Vorrichtung kann somit je nach Ausbildung Steuerungsaufgaben und/oder Regelungsaufgaben und/oder Verarbeitungsaufgaben übernehmen.

Ein weiterer Aspekt der vorliegenden Offenbarung betrifft einen elektrischen Energiespeicher (z. B. eine Traktionsbatterie) für ein Kraftfahrzeug (z. B. für ein Elektrofahrzeug). Der elektrische Energiespeicher weist mehrere (z. B. identische) Batteriezellen (z. B. Lithium-Ionen-Batteriezellen) auf. Beispielsweise können die Batteriezellen als Rundzellen, Pouchzellen und/oder prismatische Zellen ausgebildet sein. Weiterhin weist der elektrische Energiespeicher eine (z. B. Überwachungs-)Vorrichtung, wie hierin beschrieben, auf. Folglich sollen die vorstehend im Zusammenhang mit der Vorrichtung offenbarten Merkmale auch im Zusammenhang mit dem elektrischen Energiespeicher offenbart und beanspruchbar sein. Entsprechendes soll auch umgekehrt gelten. Die Vorrichtung kann dabei bspw. mit den mehreren Batteriezellen (z. B. elektrisch) gekoppelt und/oder verbunden sein.

Ein weiterer Aspekt der vorliegenden Offenbarung betrifft ein Kraftfahrzeug. Bevorzugt ist das Kraftfahrzeug ein Hybrid- oder Elektrofahrzeug, besonders bevorzugt ein Nutzfahrzeug, bspw. ein Hybrid-Nutzfahrzeug oder Elektro-Nutzfahrzeug. Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder ein Omnibus sein. Das Kraftfahrzeug weist dabei eine Vorrichtung, wie hierin beschrieben, und/oder einen elektrischen Energiespeicher, wie hierin beschrieben, auf. Folglich sollen die vorstehend im Zusammenhang mit der Vorrichtung bzw. dem Energiespeicher offenbarten Merkmale auch im Zusammenhang mit dem Kraftfahrzeug offenbart und beanspruchbar sein. Entsprechendes soll auch umgekehrt gelten.

Es versteht sich, dass die hierin aus Gründen der Übersichtlichkeit für "eine Batteriezelle" beschriebene Lehre auch für mehrere Batteriezellen möglich ist. Beispielsweise kann das Überwachen ein (z. B. paralleles und/oder gleichzeitiges) Überwachen von (jeweiligen) Zellspannungssignalen mehrerer Batteriezellen aufweisen.

Weiterhin sollen sich die Angaben "obere", "untere", "höhere", "niedrigere" Spannung jeweils auf Spannungsbeträge mit demselben Vorzeichen, z. B. nur positive oder nur negative Spannungen, beziehen.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
- Figur 1: eine schematische Darstellung eines Kraftfahrzeugs gemäß einer Ausführungsform;
- Figur 2: eine schematische Darstellung eines elektrischen Energiespeichers gemäß einer Ausführungsform;
- Figur 3: eine schematische Darstellung eines Verfahrens gemäß einer Ausführungsform; und
- Figur 4: eine schematische Darstellung eines Spannungskennfelds zur Illustration von Abschaltbedingungen gemäß einer Ausführungsform.

Die in den Figuren dargestellten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

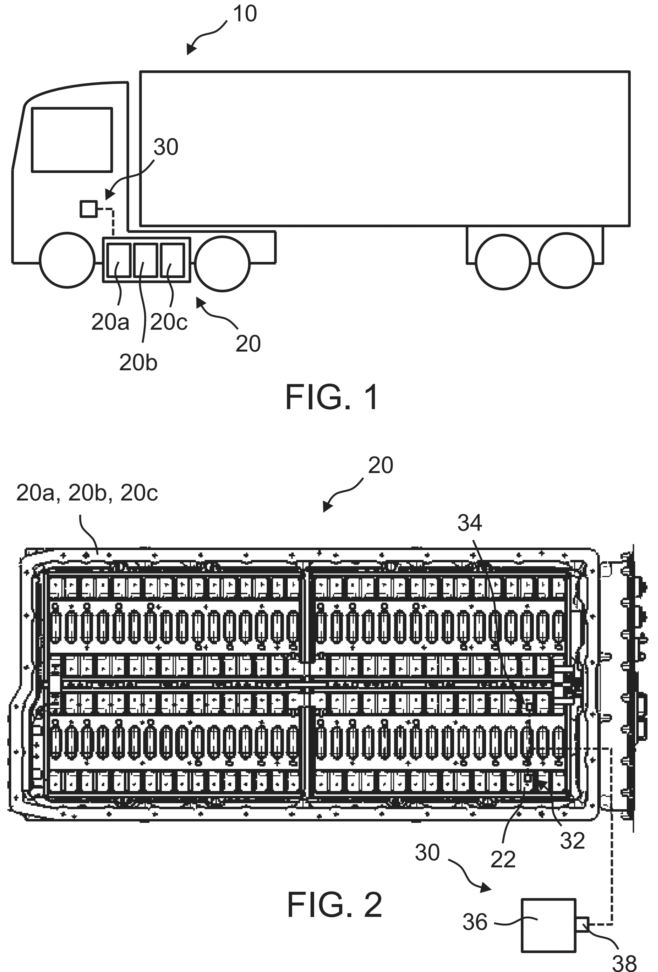

Figur 1 zeigt ein Kraftfahrzeug 10. Das Kraftfahrzeug 10 kann beispielsweise wie dargestellt, ein Sattelschlepper sein. Bei dem Kraftfahrzeug 10 kann es sich allerdings auch um einen Lastkraftwagen, einen Omnibus, eine Baumaschine oder einen Personenkraftwagen handeln.

Bevorzugt handelt es sich bei dem Kraftfahrzeug 10 um ein Elektrofahrzeug, besonders bevorzugt um ein Elektro-Nutzfahrzeug. Entsprechend kann das Kraftfahrzeug 10 mindestens eine elektrische Antriebseinheit (nicht dargestellt) zum Vortrieb des Kraftfahrzeugs 10, z. B. einen zentralen Elektroantrieb, mehrere Elektroradnabenantriebe oder mehrere radnahe Elektroantriebe, aufweisen.

Wie in Figur 1 dargestellt, weist das Kraftfahrzeug 10 einen elektrischen Energiespeicher 20 und eine Vorrichtung 30 zur Funktionsüberwachung von Batteriezellen des elektrischen Energiespeichers 20 auf.

Der elektrische Energiespeicher 20 dient bevorzugt zum Speichern elektrischer Energie und/oder zum Bereitstellen elektrischer Energie für die mindestens eine elektrische Antriebseinheit. Der elektrische Energiespeicher 20 kann über Schaltschütze mit einem Bordnetz des Kraftfahrzeugs 10 verbindbar sein.

Bevorzugt ist der elektrische Energiespeicher 20 als Traktionsbatterie und/oder Hochvolt-Energiespeicher ausgeführt. Der Hochvolt-Energiespeicher kann z. B. mit einer Gleichspannung zwischen 60 V und 1,5 kV, besonders bevorzugt zwischen 400 V und 850 V, betrieben werden.

Der elektrische Energiespeicher 20 kann als ein zentraler Energiespeicher ausgebildet sein. Wie beispielhaft in Figur 1 dargestellt, kann der elektrische Energiespeicher 20 allerdings auch mehrere Batteriepacks, vorliegend die Batteriepacks 20a, 20b, 20c, aufweisen. Die Batteriepacks 20a, 20b, 20c können bspw. jeweils identisch ausgebildet sein und jeweils mehrere Batteriezellen 22 und/oder Batteriemodule aufweisen. Die Batteriepacks 20a, 20b, 20c können im Kraftfahrzeug 10 verteilt angeordnet sein und miteinander elektrisch verbunden bzw. verbindbar sein.

Wie in Figur 2 dargestellt, kann der elektrische Energiespeicher 20 bzw. können die jeweiligen Batteriepacks 20a, 20b, 20c (jeweils) mehrere, z. B. über ein schaltbares Zellkontaktiersystem (nicht dargestellt), miteinander verschaltete Batteriezellen 22, z. B. Lithium-Ionen-Batteriezellen, aufweisen. Bei den Batteriezellen 22 kann es sich bspw., wie in Figur 2 dargestellt, um prismatische Batteriezellen handeln. Grundsätzlich kann es sich bei den mehreren Batteriezellen 22 jedoch auch um Rundzellen und/oder Pouchzellen handeln. Die Batteriezellen 22 können in Form mehrerer Zellstapel und/oder mehrerer Batteriemodule angeordnet sein. Die Batteriezellen 22 können jeweils zwei Anschlüsse, insbesondere einen Pluspol und einen Minuspol, aufweisen.

An die Batteriezellen 22 kann eine Messeinrichtung 32 (nur teilweise dargestellt) der Vorrichtung 30 angeschlossen sein, die für jede der Batteriezellen 22 jeweils ein Zellspannungssignal ausgibt, welches eine jeweilige Zellspannung der jeweiligen Batteriezellen 22 angibt. Beispielsweise kann die Messeinrichtung 32 hierzu mehrere Spannungssensoren und/oder (z. B. hochohmige) Komparatorschaltungen, die jeweils ein sensiertes Spannungsniveau der Batteriezellen 22 mit einer vorgegebenen Referenzspannung vergleichen, aufweisen. Die Messeinrichtung 32 kann zumindest teilweise eine flexible Leiterplattenstruktur aufweisen und/oder oberhalb der Batteriezellen 22 angeordnet sein.

Bei den jeweiligen Zellspannungssignalen kann es sich um analoge oder digitale Zellspannungssignale handeln. Ferner können die jeweiligen Zellspannungssignale kontinuierlich oder getaktet erfasst werden. Wie im Folgenden noch eingehender ausgeführt, handelt es sich bei den Zellspannungssignalen bevorzugt jeweils um Ruhespannungssignale der Batteriezellen 22 (in einem Gleichgewichtszustand ohne angeschlossenen Verbraucher). Bei den Zellspannungssignalen kann es sich jedoch auch um Klemmenspannungssignale handeln, z. B. weil während der Erfassung der Zellspannungssignale ein Verbraucher bzw. eine Last angeschlossen wurde oder ist.

Alternativ zu einer (sensorischen) Erfassung der Zellspannungssignale kann es sich bei den Zellspannungssignalen auch um, z. B. mittels einer Schätzeinrichtung, geschätzte oder aus vergebenen Größen abgeleitete Signale handeln.

An die Batteriezellen 22 kann optional ferner eine Temperaturerfassungseinrichtung 34 (nur teilweise dargestellt) der Vorrichtung 30 angeschlossen sein, die für jede der Batteriezellen 22 jeweils ein Temperatursignal ausgibt, welches eine jeweilige Temperatur der jeweiligen Batteriezellen 22 angibt. Beispielsweise kann die Temperaturerfassungseinrichtung 34 hierzu mehrere Temperatursensoren, bspw. in Form von Heiß- oder Kaltleitern, Thermoelementen und/oder Halbleiter-Temperatursensoren, aufweisen. Auch die Temperaturerfassungseinrichtung 34 kann zumindest teilweise eine flexible Leiterplattenstruktur aufweisen und/oder oberhalb der Batteriezellen 22 angeordnet sein.

Die Zellspannungssignale und die Temperatursignale können, bspw. über entsprechende Signalleitungen (gestrichelt dargestellt), an eine Verarbeitungseinheit 36 der Vorrichtung 30 übertragen werden bzw. der Verarbeitungseinheit 36 bereitgestellt werden. Entsprechend kann die Vorrichtung 30 für ein Empfangen der Zellspannungssignale und der Temperatursignale eingerichtet sein, bspw. eine entsprechende Kommunikationseinrichtung 38 aufweisen. Über die Kommunikationseinrichtung 38 können ferner auch Steuerbefehle von der Vorrichtung 30, z. B. an das Zellkontaktiersystem, ausgegeben werden.

Die Vorrichtung 30 kann, wie beispielhaft in den Figuren 1 und 2 dargestellt, als eine zentrale Vorrichtung ausgebildet sein, die allen Batteriezellen 22 zugeordnet ist. Grundsätzlich kann die Vorrichtung 30 allerdings auch dezentral ausgebildet sein, bspw. in Form mehrerer Module bzw. Einheiten, die bspw. jeweils (nur) die Funktion der Batteriezellen 22 eines jeweiligen Batteriepacks 20a, 20b, 20c überwachen können.

Die Vorrichtung 30 dient zur Funktionsüberwachung der Batteriezellen 22. Die Vorrichtung 30 ist hierbei für ein Durchführen eines Verfahrens, wie hierin offenbart, konfiguriert. Beispielsweise kann die Vorrichtung 30 bzw. deren Verarbeitungseinheit 36 zur Verarbeitung der Zellspannungssignale und/oder der Temperatursignale eingerichtet sein und/oder über eine entsprechende Elektronik (z. B. ausgeführt als eine Treiberschaltung oder mit Mikroprozessor(en) und Datenspeicher) verfügen. Die Vorrichtung 30 kann ferner Teil eines Batteriemanagementsystems des Kraftfahrzeugs 10 ausgeführt sein.

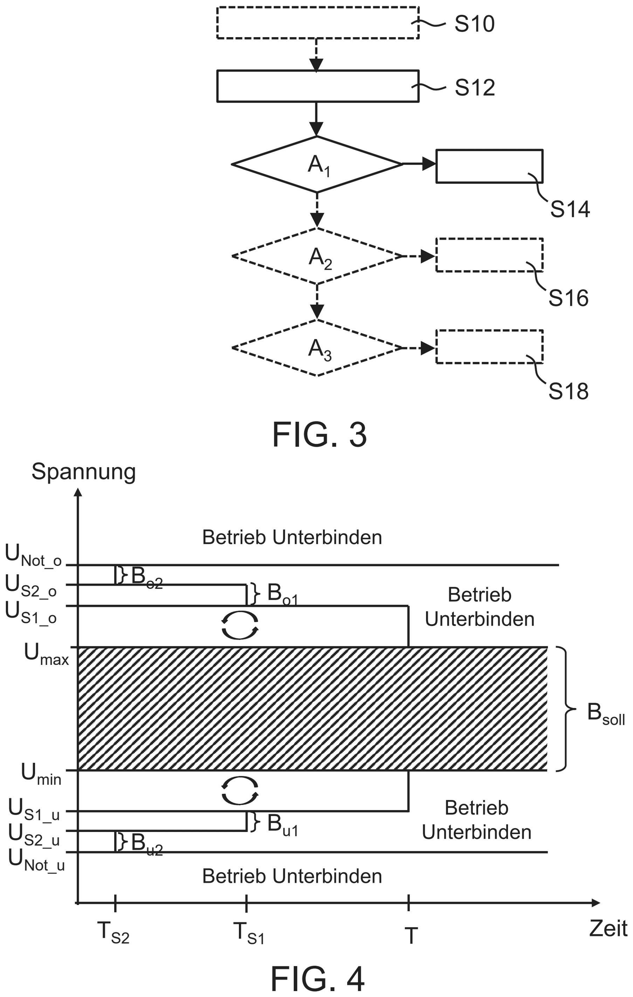

Figur 3 zeigt schematisch ein Verfahren zur Funktionsüberwachung von Batteriezellen 22. Das Verfahren kann beispielsweise im Betrieb der Vorrichtung 30 angewendet und/oder durchgeführt werden. Aus Gründen der Übersichtlichkeit wird das Verfahren im Folgenden lediglich für eine Batteriezelle 22 beschrieben. Es versteht sich jedoch, dass das Verfahren ebenso für ein paralleles Überwachen mehrerer Batteriezellen 22 verwendet werden kann.

In einem optionalen Schritt S10 kann ein (z. B. kontinuierliches) Bereitstellen eines Zellspannungssignals erfolgen, wobei das Zellspannungssignal eine Zellspannung einer Batteriezelle 22 angibt. Beispielsweise kann das Zellspannungssignal von der Messeinrichtung 32 oder der Schätzeinrichtung bereitgestellt werden. Das Bereitstellen kann bspw. ein Empfangen des Zellspannungssignals mittels der Kommunikationseinrichtung 38 aufweisen.

In dem Schritt S12 erfolgt ein Überwachen des Zellspannungssignals. Beispielsweise kann das Überwachen ein Verfolgen des zeitlichen Verlaufs des Zellspannungssignals (bzw. dessen Betrags) mittels der Verarbeitungseinheit 36 aufweisen.

Bevorzugt wird das Zellspannungssignal dabei zumindest zeitweise mindestens 45 Minuten, vorzugsweise mindestens 75 Minuten, nach einer letzten Belastung und/oder einer letzten Ladung der Batteriezelle 22 überwacht. Zudem oder alternativ kann das Zellspannungssignal zumindest zeitweise in einem unbelasteten Zustand der Batteriezelle 22 und/oder während die Batteriezelle 22 nicht geladen wird, überwacht werden. Beispielsweise kann das Zellspannungssignal zumindest zeitweise dann überwacht werden, wenn gezielt keine elektrische Energie aus der Batteriezelle 22 entnommen oder wenn gezielt elektrische Energie der Batteriezelle 22 zugeführt wird. Entsprechend kann es sich bei dem Zellspannungssignal um ein Ruhespannungssignal der Batteriezelle 22, z. B. bei offenem Stromkreis zwischen den Polen der Batteriezelle 22, handeln.

Lediglich beispielhaft kann das Überwachen des Zellspannungssignals (zumindest zeitweise) durchgeführt werden, während das Kraftfahrzeug (noch) abgestellt (z. B. geparkt) ist und/oder der elektrische Energiespeicher 20 noch nicht (durch Schließen der Schaltschütze) mit dem Bordnetz verbunden ist. Beispielsweise kann das Überwachen des Zellspannungssignals beim Start (bzw. einer Inbetriebnahme) des Kraftfahrzeugs 10 durchgeführt werden, z. B. unmittelbar nach einem Drehen eines Zündschlüssels oder Betätigen eines Startknopfs des Kraftfahrzeugs 10.

Das Verfahren weist eine vorbestimmte, d. h. zuvor festgelegte, Abschaltbedingung A1 auf. Bevorzugt ist die Abschaltbedingung A1 dann erfüllt, wenn das überwachte Zellspannungssignal für eine vorbestimmte Zeitspanne T, z. B. 60 Minuten, außerhalb eines vorbestimmten zulässigen Spannungsbereichs Bₛₒₗₗ liegt. Wie in Figur 4 dargestellt, kann der zulässige Spannungsbereich Bₛₒₗₗ bspw. durch einen oberen Spannungsgrenzwert Uₘₐₓ und einen unteren Spannungsgrenzwert Uₘᵢₙ begrenzt sein. Entsprechend kann der zulässige Spannungsbereich Bₛₒₗₗ ein Spannungsband sein.

Der obere Spannungsgrenzwert Uₘₐₓ entspricht vorzugsweise einer, z. B. von einem Hersteller der Batteriezelle 22 vorgegebenen, Ladeschlussspannung der Batteriezelle 22. Uₘₐₓ bzw. die Ladeschlussspannung kann somit anzeigen, dass die Batteriezelle 22 vollständig aufgeladen ist und nicht weiter aufgeladen werden sollte.

Der untere Spannungsgrenzwert Uₘᵢₙ entspricht vorzugsweise einer, z. B. von einem Hersteller der Batteriezelle 22 vorgegebenen, Entladeschlussspannung der Batteriezelle. Uₘᵢₙ bzw. die Entladeschlussspannung kann bspw. eine minimale Spannung anzeigen, bis zu der die Batteriezelle 22 entladen werden kann, ohne dass eine Schädigung der Batteriezelle 22 auftritt. Wird Uₘᵢₙ bzw. die Entladeschlussspannung unterschritten, kann eine Tiefentladung der Batteriezelle 22 vorliegen.

Um zu prüfen, ob die Abschaltbedingung A1 erfüllt ist, kann bspw. wenn das überwachte Zellspannungssignal erstmalig außerhalb des zulässigen Spannungsbereichs Bₛₒₗₗ liegt, ein Zähler gestartet werden. Der Zahler kann ausgebildet sein, bspw. in Sekunden- oder Minutenschritten, bis zum Ablauf der vorbestimmten Zeitspanne T hoch- oder runterzuzählen. Liegt das überwachte Zellspannungssignal während dieser Zeit ausschließlich außerhalb des zulässigen Spannungsbereichs Bₛₒₗₗ, ist die Abschaltbedingung A1 bevorzugt erfüllt. Nimmt das überwachte Zellspannungssignal vor Ablauf der Zeitspanne T (wieder) einen Spannungswert innerhalb des zulässigen Spannungsbereichs Bₛₒₗₗ an, kann der Zähler zurückgesetzt werden. Bei einem erneuten Unter- oder Überschreiten des zulässigen Spannungsbereichs Bₛₒₗₗ kann der Zähler dann erneut gestartet werden.

Ist die Abschaltbedingung A1 erfüllt, erfolgt in einem Schritt S14 ein Unterbinden eines Betriebs der Batteriezelle 22, z. B. weil mit dem Vorliegen der Abschaltbedingung A1 ein Zelldefekt vermutet wird. Beispielsweise kann das Unterbinden ein Verbot des Betriebes der Batteriezelle 22, ein Blockieren einer Inbetriebnahme der Batteriezelle 22 und/oder ein Abtrennen der Batteriezelle 22 von weiteren Batteriezellen 22 des elektrischen Energiespeichers 20 sein. Hierzu können über die Kommunikationseinrichtung 38 entsprechende Steuerbefehle, z. B. an das Zellkontaktiersystem, ausgebbar sein.

Grundsätzlich kann dabei gezielt nur die die Abschaltbedingung A1 erfüllende (defekte) Batteriezelle 22, z. B. über ein entsprechendes Schalten des Zellkontaktiersystems, aus dem Stromkreis entfernt werden, sodass alle weiteren Batteriezellen 22 weiterhin betreibbar sind. Alternativ kann bspw. das die (defekte) Batteriezelle 22 enthaltende Batteriepack 20a, 20b, 20c insgesamt aus dem Stromkreis entfernt werden, wobei vorzugsweise die verbleibenden Batteriepacks 20a, 20b, 20c weiterhin betreibbar sind.

Optional kann, wenn die Abschaltbedingung A1 erfüllt ist, auch ein Senden eines Befehls zur Ausgabe eines Warnhinweises an eine Ausgabeeinheit des Kraftfahrzeugs 10 und/oder ein Senden einer Fehlermeldung an einen Fehlerspeicher des Kraftfahrzeugs 10 erfolgen.

In einer Ausführungsform kann lediglich die Abschaltbedingung A1 vorgesehen sein. Zusätzlich oder alternativ zur Abschaltbedingung A1 können jedoch weitere Abschaltbedingungen, in dem in Figur 3 exemplarisch dargestellten Fall z. B. die Abschaltbedingungen A2 und A3, vorgesehen sein. Die entsprechenden Abschaltbedingungen A1, A2 und A3 können dabei unabhängig voneinander sein bzw. unabhängig voneinander überprüft werden. Entsprechend müssen bevorzugt gerade nicht alle Abschaltbedingungen A1, A2 und A3 gleichzeitig erfüllt sein, damit die entsprechenden Schritte ausgeführt werden. Vielmehr triggert bereits das Erfüllen einer der Abschaltbedingungen A1, A2 und A3 eine entsprechende Verfahrenshandlung, ohne dass die weiteren Abschaltbedingungen (auch) erfüllt sein müssen. Die Abschaltbedingungen A1, A2 und A3 können somit bspw. parallel überwacht werden.

Bevorzugt ist die Abschaltbedingung A2, welche zur besseren Unterscheidung auch als zweite Abschaltbedingung bezeichnet werden kann, dann erfüllt, wenn das überwachte Zellspannungssignal größer als ein vorgegebener oberer Notabschaltungsspannungswert U_{Not_o} oder gleich einem vorgegebenen oberen Notabschaltungsspannungswert U_{Not_o} ist; oder wenn das überwachte Zellspannungssignal kleiner als ein vorgegebener unterer Notabschaltungsspannungswert U_{Not_u} oder gleich einem vorgegebenen unteren Notabschaltungsspannungswert U_{Not_u} ist. Entsprechend soll die zweite Abschaltbedingung A2 somit vorzugsweise dann erfüllt sein, wenn das überwachte Zellspannungssignal (z. B. erstmalig) einen Wert ≥ U_{Not_o} oder (z. B. erstmalig) einen Wert ≤ U_{Not_u} annimmt, ohne dass hier eine zeitliche Dauer des Auftretens dieser (z. B. Über- bzw. Unter-)Spannungswerte berücksichtigt wird.

Der obere Notabschaltungsspannungswert U_{Not_o} entspricht vorzugsweise einem in keinem Fall (auch nicht kurzzeitig) tolerierbaren Zellhöchstspannungswert der Batteriezelle 22. Entsprechend kann der obere Notabschaltungsspannungswert U_{Not_o} größer als Uₘₐₓ festgelegt sein. Beispielsweise kann U_{Not_o} = 1.05*Uₘₐₓ sein.

Der untere Notabschaltungsspannungswert U_{Not_u} entspricht vorzugsweise einem in keinem Fall (auch nicht kurzzeitig) tolerierbaren Zellniedrigspannungswert der Batteriezelle 22. Entsprechend kann der untere Notabschaltungsspannungswert U_{Not_u} kleiner als Uₘᵢₙ festgelegt sein. Beispielsweise kann U_{Not_u} = 0.95*Uₘᵢₙ sein.

Ist die Abschaltbedingung A2 erfüllt, erfolgt in einem Schritt S16 ein Unterbinden eines Betriebs der Batteriezelle 22. Auch hier kann das Unterbinden ein Verbot des Betriebes der Batteriezelle 22, ein Blockieren einer Inbetriebnahme der Batteriezelle 22 und/oder ein Abtrennen der Batteriezelle 22 von weiteren Batteriezellen 22 des elektrischen Energiespeichers 20 sein. Weiterhin kann auch in diesem Fall optional ein Senden eines Befehls zur Ausgabe eines (z. B. anderen) Warnhinweises an die Ausgabeeinheit des Kraftfahrzeugs 10 und/oder ein Senden einer (z. B. anderen) Fehlermeldung an den Fehlerspeicher des Kraftfahrzeugs 10 erfolgen.

Um die Betriebssicherheit weiter zu erhöhen, ist in dem in Figur 3 exemplarisch dargestellten Fall ferner die optionale Abschaltbedingung A3 vorgesehen, z. B. um dadurch Zelldefekte mittlerer Schwere zu detektieren. Bevorzugt ist die Abschaltbedingung A3, welche zur besseren Unterscheidung auch als dritte Abschaltbedingung bezeichnet werden kann, dann erfüllt, wenn das überwachte Zellspannungssignal entweder für eine vorbestimmte kumulierte Zeitspanne T_{S1} innerhalb eines von dem zulässigen Spannungsbereich Bₛₒₗₗ beabstandeten und zu höheren Spannungen versetzten oberen Spannungsbands Bₒ₁; oder für eine vorbestimmte kumulierte Zeitspanne T_{S1} innerhalb eines von dem zulässigen Spannungsbereich Bₛₒₗₗ beabstandeten und zu niedrigeren Spannungen versetzten unteren Spannungsbands Bᵤ₁ liegt. Bevorzugt ist die kumulierte Zeitspanne T_{S1} (der Abschaltbedingung A3) dabei kleiner als die vorbestimmte Zeitspanne T (der Abschaltbedingung A1).

In einer Ausführungsform kann sich das obere Spannungsband Bₒ₁ (z. B. vollständig) zwischen einem oberen Sicherheitsspannungswert U_{S1_o} und dem oberen Notabschaltungsspannungswert U_{Not_o} erstrecken. Der obere Sicherheitsspannungswert U_{S1_o} kann dabei größer als der obere Spannungsgrenzwert Uₘₐₓ und kleiner als der obere Notabschaltungsspannungswert U_{Not_o} sein. Lediglich beispielhaft kann U_{S1_o} = 1.02*Uₘₐₓ sein.

Weiterhin kann sich das untere Spannungsband Bᵤ₁ (z. B. vollständig) zwischen einem unteren Sicherheitsspannungswert U_{S1_u} und dem unteren Notabschaltungsspannungswert U_{Not_u} erstrecken. Der untere Sicherheitsspannungswert U_{S1_u} kann dabei kleiner als der untere Spannungsgrenzwert Uₘᵢₙ und größer als der untere Notabschaltungsspannungswert U_{Not_u} sein. Lediglich beispielhaft kann U_{S1_u} = 0.98*Uₘᵢₙ sein.

Während für ein Erfüllen der Abschaltbedingung A1 das überwachte Zellspannungssignal für die vorbestimmte Zeitspanne T ununterbrochen außerhalb des zulässigen Spannungsbereichs Bₛₒₗₗ liegen muss, ist die Abschaltbedingung A3 bevorzugt dann erfüllt, wenn das überwachte Zellspannungssignal kumuliert über die gesamte Überwachungszeit entweder für die Zeitdauer T_{S1} innerhalb des oberen Spannungsbands Bₒ₁ oder für die Zeitdauer T_{S1} innerhalb des unteren Spannungsbands Bᵤ₁ vorgelegen hat. Entsprechend erfolgt im Zusammenhang mit der Abschaltbedingung A3 kein Zurücksetzen eines Zählers, wenn das überwachte Zellspannungssignal den Spannungsbereich des oberen oder unteren Spannungsbands Bₒ₁, Bᵤ₁ wieder verlässt. Vielmehr wird hier bevorzugt eine "Gesamtaufenthaltsdauer" des Zellspannungssignals in dem oberen bzw. unteren Spannungsband Bₒ₁, Bᵤ₁ überwacht.

Ist die Abschaltbedingung A3 erfüllt, erfolgt in einem Schritt S18 ein Unterbinden eines Betriebs der Batteriezelle 22. Auch hier kann das Unterbinden ein Verbot des Betriebes der Batteriezelle 22, ein Blockieren einer Inbetriebnahme der Batteriezelle 22 und/oder ein Abtrennen der Batteriezelle 22 von weiteren Batteriezellen 22 des elektrischen Energiespeichers 20 sein. Weiterhin kann auch in diesem Fall optional ein Senden eines Befehls zur Ausgabe eines (z. B. nochmals anderen) Warnhinweises an die Ausgabeeinheit des Kraftfahrzeugs 10 und/oder ein Senden einer (z. B. nochmals anderen) Fehlermeldung an den Fehlerspeicher des Kraftfahrzeugs 10 erfolgen.

Um die Betriebssicherheit noch weiter zu erhöhen, kann, wie in Figur 4 dargestellt, ein weiteres oberes Spannungsband Bₒ₂ bzw. ein weiteres unteres Spannungsband Bᵤ₂ vorgesehen sein, z. B. um dadurch Zelldefekte kritischer Schwere zu detektieren.

Beispielsweise kann das weitere obere Spannungsband Bₒ₂ zwischen dem oberen Spannungsband Bₒ₁ und dem oberen Notabschaltungsspannungswert U_{Not_o} angeordnet sein. Entsprechend kann sich das weitere obere Spannungsband Bₒ₂ zwischen einem weiteren oberen Sicherheitsspannungswert U_{S2_o} und dem oberen Notabschaltungsspannungswert U_{Not_o} und das obere Spannungsband Bₒ₁ zwischen dem oberen Sicherheitsspannungswert U_{S1_o} und dem weiteren oberen Sicherheitsspannungswert U_{S2_o} erstrecken. Der weitere obere Sicherheitsspannungswert U_{S2_o} kann größer als der obere Sicherheitsspannungswert U_{S1_o} und kleiner als der obere Notabschaltungsspannungswert U_{Not_o} sein. Lediglich beispielhaft kann U_{S2_o} = 1.03*Uₘₐₓ sein.

Ebenso kann das weitere untere Spannungsband Bᵤ₂ zwischen dem unteren Spannungsband Bᵤ₁ und dem unteren Notabschaltungsspannungswert U_{Not_u} angeordnet sein. Entsprechend kann sich das weitere untere Spannungsband Bᵤ₂ zwischen einem weiteren unteren Sicherheitsspannungswert U_{S2_u} und dem unteren Notabschaltungsspannungswert U_{Not_u} und das untere Spannungsband Bᵤ₁ zwischen dem unteren Sicherheitsspannungswert U_{S1_u} und dem weiteren unteren Sicherheitsspannungswert U_{S2_o} erstrecken. Der weitere untere Sicherheitsspannungswert U_{S2_u} kann kleiner als der untere Sicherheitsspannungswert U_{S1_u} und größer als der untere Notabschaltungsspannungswert U_{Not_u} sein. Lediglich beispielhaft kann U_{S2_u} = 0.97*Uₘᵢₙ sein.

Dem weiteren oberen bzw. unteren Spannungsband Bₒ₂, Bᵤ₂ kann eine optionale weitere Abschaltbedingung A4 zugeordnet sein, die zur besseren Unterscheidung auch als vierte Abschaltbedingung bezeichnet werden kann. Beispielsweise kann die Abschaltbedingung A4 dann erfüllt sein, wenn das überwachte Zellspannungssignal entweder für eine vorbestimmte weitere kumulierte Zeitspanne T_{S2} innerhalb des weiteren oberen Spannungsbands Bₒ₂ oder für eine vorbestimmte weitere kumulierte Zeitspanne T_{S2} innerhalb des weiteren unteren Spannungsbands Bᵤ₂ liegt. Bevorzugt ist die weitere kumulierte Zeitspanne T_{S2} (der Abschaltbedingung A4) dabei kleiner als die vorbestimmte kumulierte Zeitspanne T_{S1} (der Abschaltbedingung A3). Beispielsweise kann die weitere kumulierte Zeitspanne T_{S2} nur halb so lang oder nur ein Drittel so lang wie die kumulierte Zeitspanne T_{S1} sein.

Wenn die Abschaltbedingung A4 erfüllt ist, kann wiederum ein Unterbinden eines Betriebs der Batteriezelle 22 erfolgen. Auch hier kann das Unterbinden ein Verbot des Betriebes der Batteriezelle 22, ein Blockieren einer Inbetriebnahme der Batteriezelle 22 und/oder ein Abtrennen der Batteriezelle 22 von weiteren Batteriezellen 22 des elektrischen Energiespeichers 20 sein. Weiterhin kann auch in diesem Fall optional ein Senden eines Befehls zur Ausgabe eines (z. B. wiederum anderen) Warnhinweises an die Ausgabeeinheit des Kraftfahrzeugs 10 und/oder ein Senden einer (z. B. wiederum anderen) Fehlermeldung an den Fehlerspeicher des Kraftfahrzeugs 10 erfolgen.

Insgesamt kann so ein mehrstufiges Überwachungsverfahren bereitgestellt werden, wobei mit zunehmender Abweichung des überwachten Zellspannungssignals vom zulässigen Spannungsbereich Bₛₒₗₗ immer schneller ein entsprechendes Unterbinden des Betriebs der Batteriezelle 22 erfolgen kann. Hierbei versteht sich, dass die Parameter Uₘᵢₙ, Uₘₐₓ, U_{S1_u}, U_{S1_o}, U_{S2_u}, U_{S2_o}, U_{Not_u}, U_{Not_o}, Bₛₒₗₗ, Bₒ₁, Bᵤ₁, Bₒ₂, Bᵤ₂, T, T_{S1} und/oder T_{S2} auch als Funktion der Temperatur der Batteriezelle 22 vorgegeben sein können und bspw. in Abhängigkeit des Temperatursignals angepasst und/oder verändert werden können.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Kraftfahrzeug
- 20: Elektrischer Energiespeicher
- 20a, 20b, 20c: Batteriepack
- 22: Batteriezelle
- 30: Vorrichtung zur Funktionsüberwachung von Batteriezellen
- 32: Messeinrichtung
- 34: Temperaturerfassungseinrichtung
- 36: Verarbeitungseinheit
- 38: Kommunikationseinrichtung
- Bₒ₁: Oberes Spannungsband
- Bₒ₂: Weiteres oberes Spannungsband
- Bₛₒₗₗ: Zulässiger Spannungsbereich
- Bᵤ₁: Unteres Spannungsband
- Bᵤ₂: Weiteres unteres Spannungsband
- T: Zeitspanne
- T_{S1}: Kumulierte Zeitspanne
- T_{S2}: Weitere kumulierte Zeitspanne
- U_{S1_o}: Oberer Sicherheitsspannungswert
- U_{S1_u}: Unterer Sicherheitsspannungswert
- U_{S2_o}: Weiterer oberer Sicherheitsspannungswert
- U_{S2_u}: Weiterer unterer Sicherheitsspannungswert
- Uₘₐₓ: Oberer Spannungsgrenzwert
- Uₘᵢₙ: Unterer Spannungsgrenzwert
- U_{Not_o}: Oberer Notabschaltungsspannungswert
- U_{Not_u}: Unterer Notabschaltungsspannungswert

## Patentansprüche

1. Verfahren zur Funktionsüberwachung von Batteriezellen (22), vorzugsweise Lithium-Ionen-Batteriezellen, für einen elektrischen Energiespeicher (20) für ein Kraftfahrzeug (10), wobei das Verfahren aufweist:
Überwachen eines Zellspannungssignals, das eine Zellspannung einer Batteriezelle (22) angibt; und
Unterbinden eines Betriebs der Batteriezelle (22), wenn eine vorbestimmte Abschaltbedingung (A₁) erfüllt ist, wobei die vorbestimmte Abschaltbedingung (A₁) erfüllt ist, wenn das überwachte Zellspannungssignal für eine vorbestimmte Zeitspanne (T) außerhalb eines vorbestimmten zulässigen Spannungsbereichs (Bₛₒₗₗ) liegt.

2. Verfahren nach einem der vorherigen Ansprüche, wobei:
wenn das überwachte Zellspannungssignal außerhalb des zulässigen Spannungsbereichs (Bₛₒₗₗ) liegt, ein Zähler zum Messen der vorbestimmten Zeitspanne (T) gestartet wird; und
- die vorbestimmte Abschaltbedingung (A₁) nur dann erfüllt ist, wenn innerhalb der vom Zähler gemessenen vorbestimmten Zeitspanne (T) das überwachte Zellspannungssignal ausschließlich außerhalb des zulässigen Spannungsbereichs (Bₛₒₗₗ) liegt; und/oder
- wenn innerhalb der vom Zähler gemessenen vorbestimmten Zeitspanne das überwachte Zellspannungssignal innerhalb des zulässigen Spannungsbereichs (Bₛₒₗₗ) liegt, der Zähler zurückgesetzt wird.

3. Verfahren nach einem der vorherigen Ansprüche, wobei:
das Zellspannungssignal zumindest zeitweise mindestens 30 Minuten, vorzugsweise mindestens 60 Minuten, besonders bevorzugt mindestens 90 Minuten, nach einer letzten Belastung und/oder einer letzten Ladung der Batteriezelle (22) überwacht wird; und/oder
das Zellspannungssignal zumindest zeitweise in einem Zustand, vorzugsweise Gleichgewichtszustand, der Batteriezelle (22) überwacht wird, nachdem eine Zellspannungsänderung der Batteriezelle (22) für eine Dauer von 10 Minuten weniger als 5 mV betrug; und/oder
das Zellspannungssignal zumindest zeitweise in einem unbelasteten Zustand der Batteriezelle (22) und/oder während die Batteriezelle (22) nicht geladen wird, überwacht wird.

4. Verfahren nach einem der vorherigen Ansprüche, wobei:
die vorbestimmte Zeitspanne mindestens 60 Minuten, vorzugsweise mindestens 90 Minuten, besonders bevorzugt mindestens 120 Minuten, beträgt.

5. Verfahren nach einem der vorherigen Ansprüche, wobei:
das Verfahren, vorzugsweise das Überwachen, während das Kraftfahrzeug (10) abgestellt ist und/oder bei einem Start des Kraftfahrzeugs (10) durchgeführt wird.

6. Verfahren nach einem der vorherigen Ansprüche, ferner aufweisend:
Bereitstellen eines Temperatursignals, das eine Temperatur der Batteriezelle (22) angibt; und
Anpassen des zulässigen Spannungsbereichs (Bₛₒₗₗ) in Abhängigkeit des bereitgestellten Temperatursignals, vorzugweise Auswählen des zulässigen Spannungsbereichs (Bₛₒₗₗ) aus einer Mehrzahl von für verschiedene Batteriezellentemperaturen vorgegebenen Spannungsbereichen in Abhängigkeit von der bereitgestellten Temperatur.

7. Verfahren nach einem der vorherigen Ansprüche, wobei:
der zulässige Spannungsbereich (Bₛₒₗₗ) durch:
- einen oberen Spannungsgrenzwert (Uₘₐₓ), der vorzugsweise einer Ladeschlussspannung der Batteriezelle (22) entspricht, begrenzt wird; und/oder
- einen unteren Spannungsgrenzwert (Uₘᵢₙ), der vorzugsweise einer Entladeschlussspannung der Batteriezelle (22) entspricht, begrenzt wird.

8. Verfahren nach Anspruch 7, wobei:
die vorbestimmte Abschaltbedingung (A₁) erfüllt ist, wenn:
das überwachte Zellspannungssignal für die vorbestimmte Zeitspanne (T) oberhalb des oberen Spannungsgrenzwerts (Uₘₐₓ) und unterhalb eines oberen Notabschaltungsspannungswerts (U_{Not_o}) liegt; oder
das überwachte Zellspannungssignal für die vorbestimmte Zeitspanne (T) unterhalb des unteren Spannungsgrenzwerts (Uₘᵢₙ) und oberhalb eines vorbestimmten unteren Notabschaltungsspannungswerts (U_{Not_u}) liegt.

9. Verfahren nach Anspruch 7 oder 8, ferner aufweisend:
Unterbinden des Betriebs der Batteriezelle (22), wenn eine andere vorbestimmte Abschaltbedingung (A₃) erfüllt ist, wobei die andere vorbestimmte Abschaltbedingung erfüllt ist, wenn das überwachte Zellspannungssignal entweder:
- für eine vorbestimmte kumulierte Zeitspanne (T_{S1}) innerhalb eines von dem zulässigen Spannungsbereich (Bₛₒₗₗ) beabstandeten und zu höheren Spannungen versetzten oberen Spannungsbands (Bₒ₁) liegt, wobei vorzugsweise das obere Spannungsband (Bₒ₁) zwischen dem oberen Spannungsgrenzwert (Uₘₐₓ) und dem oberen Notabschaltungsspannungswert (U_{Not_o}) angeordnet ist; oder
- für eine vorbestimmte kumulierte Zeitspanne (T_{S1}) innerhalb eines von dem zulässigen Spannungsbereich (Bₛₒₗₗ) beabstandeten und zu niedrigeren Spannungen versetzten unteren Spannungsbands (Bᵤ₁) liegt, wobei vorzugsweise das untere Spannungsband (Bᵤ₁) zwischen dem unteren Spannungsgrenzwert (Uₘᵢₙ) und dem unteren Notabschaltungsspannungswert (U_{Not_u}) angeordnet ist.

10. Verfahren nach einem der vorherigen Ansprüche, ferner aufweisend:
Senden eines Befehls zur Ausgabe eines Warnhinweises an eine Ausgabeeinheit des Kraftfahrzeugs (10), wenn die vorbestimmte Abschaltbedingung (A₁) erfüllt ist; und/oder
Senden einer Fehlermeldung an einen Fehlerspeicher des Kraftfahrzeugs (10), wenn die vorbestimmte Abschaltbedingung (A₁) erfüllt ist.

11. Verfahren nach einem der vorherigen Ansprüche, wobei:
das Unterbinden des Betriebs der Batteriezelle (22) aufweist:
elektrisches Abtrennen der Batteriezelle (22) von weiteren Batteriezellen (22) des elektrischen Energiespeichers (20), vorzugsweise derart, dass die weiteren Batteriezellen (22) weiterhin betreibbar sind; und/oder
Deaktivieren eines gesamten, die Batteriezelle (22) aufweisenden Moduls oder Batteriepacks (20a, 20b, 20c) des elektrischen Energiespeichers (20), vorzugsweise derart, dass weitere Module oder Batteriepacks (20a, 20b, 20c) des elektrischen Energiespeichers (20) weiterhin betreibbar sind.

12. Vorrichtung (30) zur Funktionsüberwachung von Batteriezellen (22), vorzugsweise **Li**thium-lonen-Batteriezellen, für einen elektrischen Energiespeicher (20) für ein Kraftfahrzeug (10), wobei die Vorrichtung (30) für ein Durchführen eines Verfahrens nach einem der vorherigen Ansprüche eingerichtet ist.

13. Vorrichtung (30) nach Anspruch 12, aufweisend:
eine Messeinrichtung (32), die für ein Erfassen eines Zellspannungssignals mindestens einer Batteriezelle (22) eingerichtet ist; und/oder
eine Temperaturerfassungseinrichtung (34), die für ein Erfassen eines Temperatursignals mindestens einer Batteriezelle (22) eingerichtet ist;

14. Elektrischer Energiespeicher (20), vorzugsweise Hochvolt-Energiespeicher, für ein Kraftfahrzeug (10), aufweisend:
mehrere Batteriezellen (22), vorzugsweise Lithium-lonen-Batteriezellen; und
eine Vorrichtung (30) nach einem der Ansprüche 12 oder 13.

15. Kraftfahrzeug (10), vorzugsweise Nutzfahrzeug, aufweisend:
eine Vorrichtung (30) nach einem der Ansprüche 12 oder 13; und/oder
einen elektrischen Energiespeicher (20) nach Anspruch 14.
